(19) Europäisches Patentamt
European Patent Office
Office européen des brevets

(11) EP 3 461 779 A1

(12) EUROPEAN PATENT APPLICATION

(43) Date of publication:
03.04.2019 Bulletin 2019/14

(51) Int Cl.:
B66B 7/12 (2006.01)          B66B 7/08 (2006.01)

(21) Application number: 18197345.4

(22) Date of filing: 27.09.2018

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 29.09.2017  US 201715721269

(71) Applicant: Otis Elevator Company
Farmington, Connecticut 06032 (US)

(72) Inventors:
• OKAWA, Masafumi
  Sanbu-gun, Chiba 289-1693 (JP)
• NAKAI, Fumio
  Sanbu-gun, Chiba 289-1693 (JP)

(74) Representative: Dehns
St. Brides House
10 Salisbury Square
London EC4Y 8JD (GB)

(54) **ROPE DETERIORATION DETECTION**

(57)    A method for detecting deterioration of a plurality of wire ropes is provided. Each of the wire ropes extends over a conductive sheave in parallel. The wire ropes define a measurement length extending between one end of the wire ropes and contact points of the wire ropes with the conductive sheave. The method comprises measuring the resistance through a conductive path passing through the measurement lengths of two of the wire ropes and the conductive sheave and detecting the deterioration of the wire ropes from the measured resistance.

Fig.1

**Description**

BACKGROUND

This invention generally relates to rope deterioration detection. More particularly, this invention relates to a deterioration detection method and device for detecting deterioration of wire ropes.

Tension members, such as wire ropes or coated steel belts containing metal cords, are used to move an elevator car up and down within a hoistway. Because the condition of the tension members is critical to the safety of the operation of the elevator, there is a need for early detection of deterioration, e.g. corrosion, fretting, wire breakage, etc., of the tension members.

Deterioration of tension members can be caused by normal operation of the elevator over time. The primary source of deterioration is the cyclic bending of the tension members around sheaves as the elevator is moved up and down in a hoistway. The deterioration of tension members is normally not uniform along the length of the tension members, but is rather focused to areas of the tension members that are subjected to high levels or severities of bending cycles.

Some electrical characteristics, such as electrical resistance or impedance, of the wire ropes or metal cords will vary as the cross-sectional areas of the wire ropes or metal cords decrease. Accordingly, it is possible to detect deterioration of a tension member based on the electrical characteristics thereof. There currently are monitoring systems which employ a resistance-based inspection scheme to monitor the resistance of tension members.

United States Patent No. 7,123,030 discloses one such system called resistance-based inspection (RBI) which correlates changes in electrical resistance to reduction in the cross-sectional area of a cord of a coated steel belt. The RBI system is secured to the coated steel belt at both ends thereof at fixed points of the elevator system to monitor an electrical resistance of each cord in the belt.

However, in a RBI system such as above, the cords need to be insulated. Cords contained in a coated steel belt are conventionally surrounded by an electrically insulative material. However, uncoated wire ropes, which are still mainly used in elevator systems at present, particularly in high-rise buildings, are not insulated and can not be inspected using such system. Further, since the resistance of the whole cord length is monitored in a RBI system, it is not possible to determine the location of deterioration.

Deterioration of uncoated wire ropes is usually determined by visual inspection and/or by measuring the diameter of the wire ropes. Determining deterioration of the wire ropes by visual inspection is very difficult and requires experience. It also takes a long time especially in high-rise buildings having long wire ropes.

In view of the above and other considerations, there is a need for a deterioration detection device for inspecting uncoated wire ropes, particularly for use in an elevator system. Further, there is a need for determining the location of deterioration in a more efficient way.

BREIF SUMMARY

According to one embodiment of the invention, a method for detecting deterioration of a plurality of wire ropes is provided. Each of the wire ropes extends over a conductive sheave in parallel. The wire ropes define a measurement length extending between one end of the wire ropes and contact points of the wire ropes with the conductive sheave. The method comprises measuring the resistance through a conductive path passing through the measurement lengths of two of the wire ropes and the conductive sheave and detecting the deterioration of the wire ropes from the measured resistance.

According to another embodiment of the invention, a rope deterioration detection device for detecting deterioration of a plurality of wire ropes extending over a conductive sheave in parallel comprises a measuring instrument attached to one end of the wire ropes for measuring the resistance of a plurality of conductive paths including the measurement length of two of the wire ropes and the conductive sheave. The measurement length extends between the one end of the wire ropes and contact points of the wire ropes with the conductive sheave. The rope deterioration detection device further comprises a controller for determining the resistance of each wire rope from the measured resistance of the plurality of conductive paths.

BRIEF DESCRIPTION OF THE DRAWINGS

Fig. 1 is a schematic view of an elevator system including the rope deterioration detection device of the present invention.

Fig. 2 is an enlarged schematic view of a measuring instrument, hitch assembly, traction sheave and wire ropes of the elevator system shown in figure 1.

Figs. 3A and 3B are schematic views of the elevator system of Fig. 1 with an elevator car stopped at a floor.

Fig. 4A is a flowchart showing an initial setting sequence performed after installation of the elevator system.

Fig. 4B is a flowchart showing a deterioration detecting sequence performed during normal operation of the elevator system.

Figs. 5A to 5C are schematic views of the elevator system of Fig. 1 with a deteriorated wire rope having a deteriorated portion.

The detailed description explains embodiments of the invention, together with advantages and features, by way of example with reference to the drawings.

DETAILED DESCRIPTION

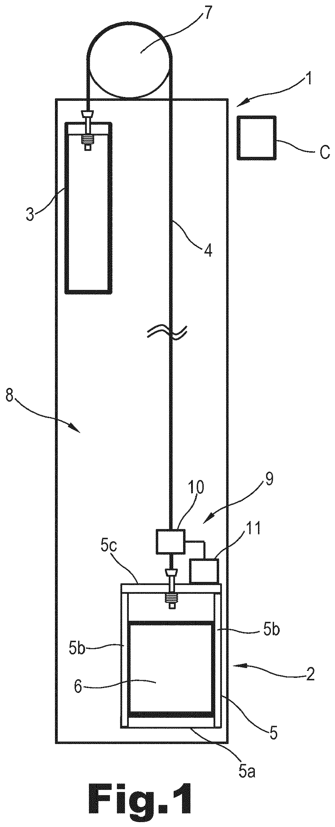

Fig. 1 schematically shows selected portions of an example elevator system 1. An elevator car 2 is connected to a counterweight 3 by a plurality of wire ropes 4. The elevator car 2 comprises a car frame 5 and a cab 6 supported on the car frame 5. The car frame 5 includes a plank 5a, a pair of uprights 5b extending vertically upwards from the plank 5a and a cross head 5c connecting the tops of the uprights 5b. The wire ropes 4 extend over a traction sheave 7 which is driven by a machine (not shown). The traction sheave 7 is comprised of a conductive material such as steel, for example. Traction between the traction sheave 7 and the wire ropes 4 drive the elevator car 2 and the counterweight 3 vertically through a hoistway 8. Operation of the elevator system 1 may be controlled by a main controller C.

The configuration of the elevator system components may vary from this example in various aspects. In other words, the invention is not necessarily limited to the example elevator system configuration or the specific components of the illustration.

The elevator system 1 further includes a rope deterioration detection device 9 for detecting deterioration of the wire ropes 4 by measuring the resistance thereof. The rope deterioration detection device 9 comprises a measuring instrument 10 in electrical communication with the wire ropes 4. The measuring instrument 10 is disposed above the elevator car 2 proximate to an end of the wire ropes 4 and is connected to a junction box 11 located on top of the elevator car 2. Data from the measuring instrument 10 is transmitted to the main controller C via the junction box 11.

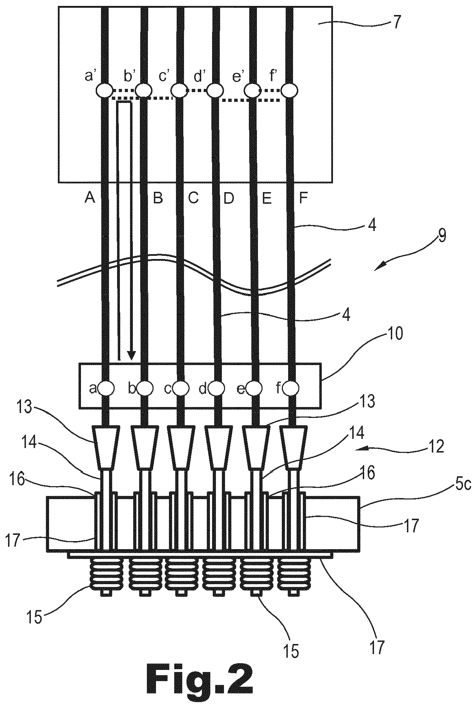

Fig. 2 is an enlarged schematic view of the measuring instrument 10, traction sheave 7 and wire ropes 4. In this example, the wire ropes 4 include six ropes A, B, C, D, E, F. However, the rope deterioration detection device 9 may be used with any number of wire ropes 4. The wire ropes 4 are attached to the crosshead 5c of the car frame 5 by a hitch assembly 12. The hitch assembly 12 includes rope hitches 13 for terminating each wire rope 4 and shackle rods 14 which are attached to the rope hitches 13. The shackle rods 14 extend through openings 16 in the crosshead 5c and are resiliently fastened to the crosshead 5c via shackle rod springs 15. The crosshead 5c is insulated from the shackle rods 14 by insulation material 17 positioned between the shackle rods 14 and the surface of the openings 16 and between the crosshead 5c and the shackle rod springs 15.

The wire ropes A, B, C, D, E, F respectively extend upwardly from the hitch assembly 12 and are each connected to the measuring instrument 10 at terminals a, b, c, d, e, f. The wire ropes A, B, C, D, E, F further extend upward from the measuring instrument 10 to the traction sheave 7 and contacts the traction sheave 7 at contact points a', b', c', d', e', f. The wire ropes A, B, C, D, E, F further extend around the traction sheave 7 and are connected to the counterweight 3 at the other end. Neither the traction sheave 7 nor the wire ropes A, B, C, D, E, F are insulated.

The rope deterioration detection device 9 uses the traction sheave 7 as a conductor to measure the resistance through a pair of wire ropes 4. More specifically, the measuring instrument 10 applies a current through a pair of terminals selected from a, b, c, d, e, f, for example, to measure the resistance of a conductive path comprising a first wire rope 4, the traction sheave 7 and a second wire rope 4. An example conductive path through wire ropes A and B is shown by an arrow in Fig. 2.

In an example embodiment, three adjacent wire ropes A, B, C and D, E, F, for example, each form a group for measurement. In the group including wire ropes A, B, C, for example, the measuring instrument 10 measures the resistance through path a-a'-b'-b, b-b'-c'-c and a-a'-c'-c. By adding the resistance of path a-a'-b'-b and path a-a'-c'-c, subtracting the resistance of path b-b'-c'-c and dividing the resulting resistance by 2, the resistance of wire rope A, i.e., the resistance of path a-a', may be obtained. The resistance of all ropes 4 may be obtained in a similar manner. In this example, a group of three adjacent wire ropes 4 are used to obtain the resistance of each wire rope 4. However, any combination of three wire ropes 4 may be used to obtain the resistance of individual wire ropes 4.

Resistance of the wire ropes 4 is measured when the elevator car stops at each floor, for example. As is conventional, when the elevator car 2 travels along the hoistway 8, the distance between the traction sheave 7 and the measuring instrument 10 changes. Therefore, it is possible to identify which portion of the wire rope 4 is being measured. By measuring the resistance of the wire ropes 4 at several car positions or several floors, it is possible to determine the resistance of individual sections S of the wire rope 4, i.e., it possible to determine which section S of the wire rope 4 is damaged.

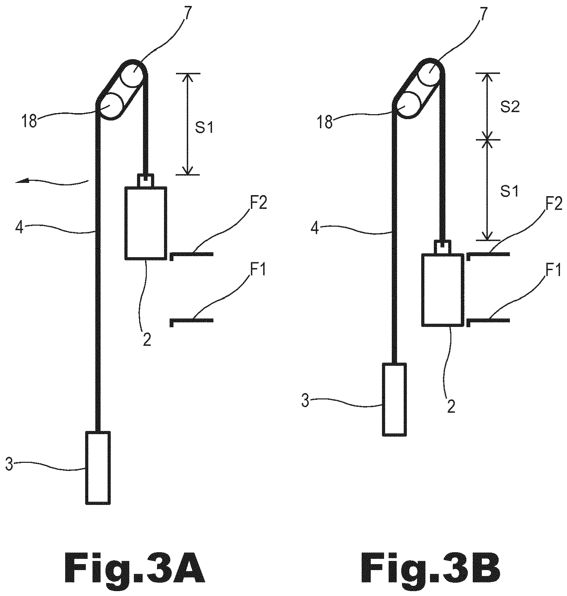

For example, with reference to Fig. 3A, which shows a schematic elevator system with a double wrap roping and further including a secondary sheave 18, the resistance $R_{2A}$ of section S1 of wire rope A may be calculated by the following equation, wherein $R_{2AB}$ is the resistance through wire ropes A and B when the elevator car is positioned at floor F2, $R_{2CA}$ is the resistance through wire ropes A and C when the elevator car is positioned at floor F2 and $R_{2BC}$ is the resistance through wire ropes B and C when the elevator car is positioned at floor F2. Section S1 corresponds to the length of the wire ropes 4 from the measuring instrument 10 to the contact point with the traction sheave 7 when the elevator car 2 is positioned at floor F2.

$$R_{2A} = R_{2AB} + R_{2AC} - R_{2BC}/2$$

In Fig. 3B, the elevator car has moved to floor F1. At this location the resistance $R_{12A}$ of section S2 of wire rope A may be calculated by the following equation, wherein $R_{1AB}$ is the resistance through wire ropes A and B when the elevator car is positioned at floor F1, $R_{1AC}$ is the resistance through wire ropes A and C when the elevator car is positioned at floor F1 and $R_{1BC}$ is the resistance through wire ropes B and C when the elevator car is positioned at floor F1. Section S2 corresponds to the length of the wire ropes 4 from the measuring instrument 10 to the contact point with the traction sheave 7 when the elevator car 2 is positioned at floor F1 minus the length of Section S1.

$$R_{12A} = (R_{1AB} + R_{1AC} - R_{1BC})/2 - (R_{2AB} + R_{2AC} - R_{2BC})/2$$

In this way, the resistance of a plurality of sections S of the wire ropes 4, each corresponding to a car position, may be obtained by the rope deterioration detection device 9.

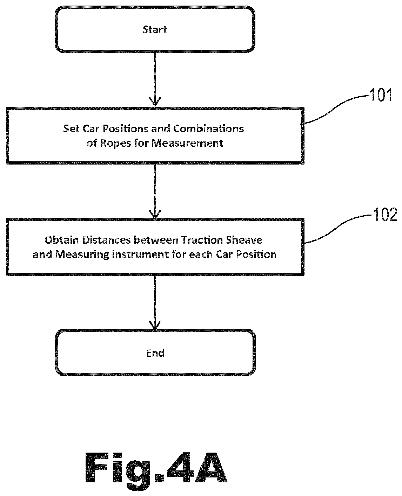

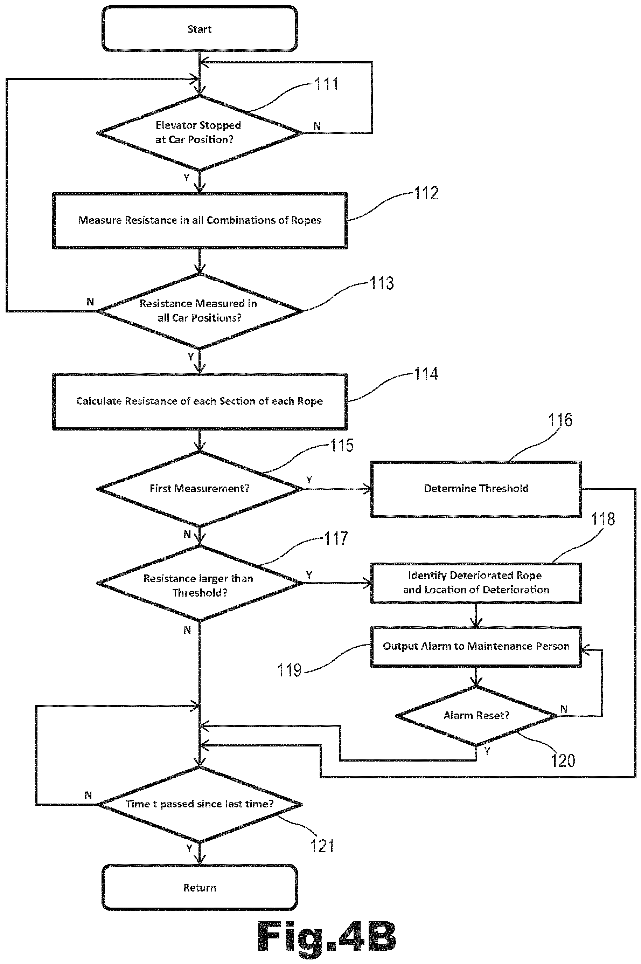

Figs. 4A and 4B show a flowchart of a sequence performed by the main controller C to identify a deteriorated rope/location of deterioration and provide an alarm to a maintenance person. Fig. 4A shows an initial setting sequence performed after installation of the elevator system 1. In step 101, the car positions to be used for measurement and combinations of ropes to be used for measurement are set. The car positions and combinations of ropes may be input by an operator. In this embodiment, the car positions correspond to each floor of a building. However, the car positions may be anywhere in the hoistway 8 where the elevator car 2 may stop, for example, every two or three floors of a building. In step 102, the distances between the traction sheave 7 and measuring instrument 10 for each of the car positions are obtained using elevator position information from an encoder. Position information from the encoder is also used to identify the position of the elevator car 2.

Fig. 4B shows a deterioration detecting sequence performed during normal operation. In step 111, it is checked if the elevator car 2 is stopped at a car position. If no, step 111 is repeated until the elevator car 2 stops at a car position. If yes, the resistance in all combinations of ropes 4 is measured in step 112. Next, the sequence proceeds to step 113, and it is checked if the resistance has been measured in all car positions. If no, the sequence returns to step 111 and steps 111 to 113 are repeated.

During normal operation of the elevator system 1, the elevator car 2 will stop randomly at car positions, for example, floors of a building input by passengers. After a while, resistance will have been measured in all car positions, and the sequence will proceed to step 114. In step 114, the resistance of each section of each rope is calculate based on the initially set car position and rope combination for measurement, distances between the traction sheave 7 and measuring instrument 10, and the resistance values measured in step 112 using equations such as explained above.

The sequence then proceeds to step 115 and checks if it is a first measurement. If yes, thresholds are determined in step 116 and the sequence proceeds to step 121 and waits until a time t passes. In this embodiment, a threshold is determined for each section of each rope from the first set of measured resistance values so that the thresholds reflect the actual length of each section and/or differences in the installed wire ropes 4. The threshold may be a resistance value which is a predetermined percentage larger than the measured resistance of a newly installed rope. The threshold may be reset each time the wire ropes 4 are replaced.

After a time t passes, the sequence will return to start and steps 111 to 115 will be performed again. This time, it will not be the first measurement and step 115 will be negative. Therefore, the sequence will proceed to step 117 and check if the resistance of each section is larger than a corresponding threshold. If yes, the deteriorated rope and location of deterioration is identified in step 118 and an alarm is output to a maintenance person in step 119. The alarm may include the identification of a specific deteriorated rope and the location of deterioration of that rope.

In step 120, it is checked if the alarm is reset. The alarm continues until it is reset. Once the alarm is reset, the sequence proceeds to step 121 and waits until a time t passes. If the resistance is not larger than a threshold in step 117, the sequence proceeds to step 121 and waits until a time t passes. In this way, the deterioration of wire ropes 4 is repeatedly checked at regular time intervals t during normal operation of the elevator system 1. The time interval t may be a few days, a few weeks or a few months, for example.

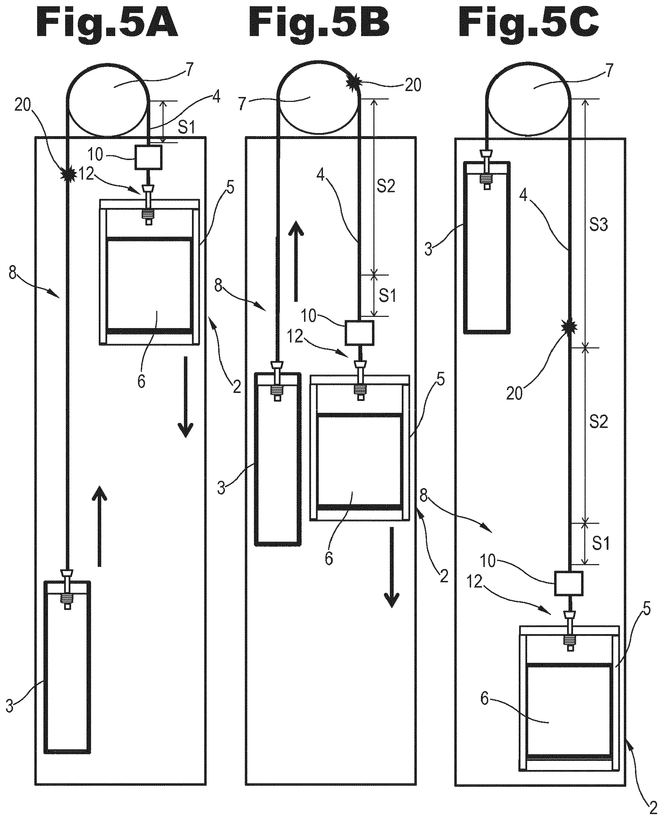

Figs. 5A to 5C show an example elevator system with a deteriorated wire rope having a deteriorated portion 20. The elevator car 2 is positioned at the third floor in Fig. 5A, the elevator car 2 is positioned at the second floor in Fig. 5B and the elevator car 2 is positioned at the first floor in Fig. 5C. Car positions and example rope sections S1, S2, S3 correspond to each floor. In Fig. 5A, the resistance of section S1 will be measured. In Fig. 5B, the resistance of sections S1 plus S2 will be measured and the resistance of section S2 will be calculated afterwards. In Fig. 5C, the resistance of sections S1 plus S2 plus S3 will be measured and the resistance of section S3 will be calculated afterwards. Section S3 including the deteriorated portion 20 will have a resistance larger than a threshold and will be identified as the location of deterioration.

Provided with such information, a maintenance person may visually inspect and/or measure the diameter of section S3 and determine if replacement of wire ropes 4 are necessary. By knowing the section S containing the deterioration, identification of the deteriorated portion 20 may be made more quickly and in a more efficient manner, especially in high-rise buildings having long wire ropes.

In this embodiment, deterioration may not be detected in the portion of the wire ropes 4 extending from the counterweight 3 to the contact point with the traction sheave 7 when the elevator car 2 is positioned at the lowermost floor. However, it will not cause any problems since deterioration in this portion is rare and insignificant. The measuring instrument 10 of the present invention may also be installed on the counterweight 3 side to measure resistance of the wire rope 4 on the counterweight 3 side.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A method for detecting deterioration of a plurality of wire ropes, each of the wire ropes extending over a conductive sheave in parallel, the wire ropes defining a measurement length extending between one end of the wire ropes and contact points of the wire ropes with said conductive sheave: the method comprising,
measuring the resistance through a conductive path passing through the measurement lengths of two of the wire ropes and said conductive sheave; and
detecting the deterioration of the wire ropes from said measured resistance.

2. The method of claim 1, wherein measuring the resistance includes measuring the resistance through said conductive path for a plurality of measurement lengths, which measurement lengths change in response to movement of said wire rope or sheave, and
wherein detecting the deterioration includes detecting the location of deterioration along the wire ropes from said measured resistance.

3. The method of claim 1 or 2, wherein the plurality of wire ropes includes at least three wire ropes, the method further comprising:

   grouping the plurality of wire ropes into a group of three wire ropes;
   measuring the resistance through said conductive path with respect to all combinations of two wire ropes in each group;
   calculating a resistance value for each wire rope from said measured resistance; and
   detecting the deteriorated wire rope from said resistance values.

4. The method of claim 3, wherein measuring the resistance includes measuring the resistance through said conductive path for a plurality of measurement lengths, which measurement lengths change in response to movement of said wire rope or sheave,

wherein calculating a resistance value includes calculating the resistance value for a plurality of sections of each wire rope; and

wherein detecting the deteriorated wire rope includes detecting the location of deterioration of the deteriorated wire rope from said resistance values.

5. The method of any preceding claim, wherein detecting the deterioration includes comparing the measured resistance to a threshold.

6. The method of claim 5, wherein the threshold is determined from a first measured resistance of new wire ropes.

7. The method of claim 4, wherein detecting the location of deterioration includes comparing each of the resistance values to a corresponding threshold for each of the plurality of sections of each wire rope.

8. The method of any preceding claim, wherein the wire ropes are hoisting ropes for hoisting an elevator car of an elevator system and the resistance is measured when the elevator car stops at a floor.

9. The method of claim 8, wherein the resistance is measured during normal operation of the elevator system.

10. The method of any preceding claim, further comprising outputting an alarm when deterioration of the wire ropes is detected.

11. A rope deterioration detection device for detecting deterioration of a plurality of wire ropes extending over a conductive sheave in parallel, comprising:

a measuring instrument attached to one end of the wire ropes for measuring the resistance of a plurality of conductive paths including the measurement length of two of the wire ropes and said conductive sheave, said measurement length extending between the one end of the wire ropes and contact points of the wire ropes with said conductive sheave; and

a controller for determining the resistance of each wire rope from the measured resistance of the plurality of conductive paths.

12. The rope deterioration detection device of claim 11, wherein the controller determines the resistance value for each section of each wire rope from the measured resistance of the plurality of conductive paths.

13. The rope deterioration detection device of claim 11 or 12, wherein the wire ropes and sheave are not insulated.

14. The rope deterioration detection device of claim 11, 12 or 13, wherein the wire ropes are hoisting ropes for hoisting an elevator car of an elevator system.

15. The rope deterioration detection device of claim 14, wherein the measuring instrument is located proximate an elevator car; or

wherein the measuring instrument is located proximate a counterweight.

**Fig.1**

**Fig.2**

Fig.3A          Fig.3B

```
                    ┌─────────────────────┐
                    │        Start        │
                    └─────────────────────┘
                               │
                               ▼
         ┌──────────────────────────────────────┐        ─101
         │   Set Car Positions and Combinations  │
         │        of Ropes for Measurement        │
         └──────────────────────────────────────┘
                               │
                               ▼
         ┌──────────────────────────────────────┐        ─102
         │  Obtain Distances between Traction Sheave  │
         │ and Measuring instrument for each Car Position │
         └──────────────────────────────────────┘
                               │
                               ▼
                    ┌─────────────────────┐
                    │         End         │
                    └─────────────────────┘
```

# Fig.4A

**Fig.4B**

# Fig.5A  Fig.5B  Fig.5C

Europäisches
Patentamt

European
Patent Office

Office européen
des brevets

# EUROPEAN SEARCH REPORT

Application Number

EP 18 19 7345

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2014/142998 A1 (OTIS ELEVATOR CO [US]) 18 September 2014 (2014-09-18) * figures 1-8 * * paragraph [0017] * * paragraph [0028] - paragraph [0031] * ----- | 1-15 | INV. B66B7/12 B66B7/08 |
| X | JP H06 286957 A (MITSUBISHI ELECTRIC BILL TECH) 11 October 1994 (1994-10-11) * figure 1 * * paragraph [0007] - paragraph [0015] * ----- | 1,5,6, 8-12,14, 15 | |

TECHNICAL FIELDS
SEARCHED      (IPC)

B66B

The present search report has been drawn up for all claims

| Place of search | Date of completion of the search | Examiner |
|---|---|---|
| The Hague | 20 February 2019 | Szován, Levente |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 19 7345

This annex lists the patent family members relating to the patent documents cited in the above-mentioned European search report.
The members are as contained in the European Patent Office EDP file on
The European Patent Office is in no way liable for these particulars which are merely given for the purpose of information.

20-02-2019

| Patent document cited in search report | | Publication date | Patent family member(s) | | Publication date |
|---|---|---|---|---|---|
| WO 2014142998 | A1 | 18-09-2014 | CN | 105102362 A | 25-11-2015 |
| | | | EP | 2969875 A1 | 20-01-2016 |
| | | | US | 2016023865 A1 | 28-01-2016 |
| | | | WO | 2014142998 A1 | 18-09-2014 |
| JP H06286957 | A | 11-10-1994 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7123030 B